# EUROPEAN PATENT APPLICATION

(11) **EP 4 090 006 A2**
(43) Date of publication of application: **16.11.2022**
(21) Application number: 22167079.7
(22) Date of filing: 07.04.2022
(51) Int. Cl.: H04N 5/232

(54) **IMAGE SIGNAL PROCESSING BASED ON VIRTUAL SUPERIMPOSITION**

(30) Priority: 23.04.2021 US 202117238448
(71) Applicant: Varjo Technologies Oy, 00100 Helsinki (FI)
(72) Inventor: Ollila, Mikko, Tampere (FI)
(74) Representative: Aaltonen, Janne Lari Antero

(57) **Abstract**

Disclosed is a system (100) comprising: image sensor (102, 202) comprising pixels arranged on photo-sensitive surface (206) thereof; and image signal processor (104) configured to: receive, from image sensor, image signals captured by corresponding pixels; and process image signals to generate at least one image (200, 404). When processing, image signal processor is configured to: determine at least one region (208) within photo-sensitive surface that corresponds to image segment (204) of at least one image over which blend object (402) is to be superimposed; and selectively perform sequence of image signal processes on given image signal and control plurality of parameters employed therefor, based on whether a given pixel that is employed to capture given image signal lies in at least one region or remaining region within photo-sensitive surface.

## Description

### TECHNICAL FIELD

The present disclosure relates to systems incorporating selective image signal processing based on virtual superimposition. Moreover, the present disclosure relates to methods for selective image signal processing based on virtual superimposition, such methods being implemented via such systems.

### BACKGROUND

Generally, images of a real-world environment are captured using cameras. In order to generate such images, image signal processing is required. This image signal processing involves processing image signals captured by pixels of an image sensor of a camera. The generated images can be utilised in extended-reality (XR) applications (such as, virtual reality (VR) applications, augmented reality (AR) applications, mixed reality (MR) applications, and the like). Such XR applications provide an immersive and interactive XR environment to a user. An XR image is produced by superimposing virtual content on at least a portion of the generated image (that is representative of the real-world environment).

However, conventional equipment and techniques of generating images have certain limitations. Firstly, the image signals constituting such images are typically processed globally during image generation, in a manner that that a same type and extent of processing is applied uniformly to all the image signals. Such a uniform processing is not suitable in most cases. For example, a real-world environment may have multiple regions wherein some regions are bright and other regions are dark and shadowy, and when a uniform processing is applied to all the image signals, bright regions may become overexposed or dark regions may become underexposed in a generated image. Secondly, computational requirements pertaining to uniformly processing the image signals for generating the image are quite heavy and arise a need for high amounts of processing resources. Furthermore, generating the images at a high rate (as is needed for the XR applications) continuously is difficult and consumes substantial processing resources. Thirdly, certain types of processing that are often performed on the image signals, are time-consuming and increase a latency of generating the image. This subsequently increases a latency of producing XR images. Fourthly, a high amount of processing resources increases power consumption and also increases a cost of an equipment that generates the image.

Therefore, in light of the foregoing discussion, there exists a need to overcome the aforementioned drawbacks associated with conventional equipment and techniques for generating images.

### SUMMARY

The present disclosure seeks to provide a system incorporating selective image signal processing based on virtual superimposition. The present disclosure also seeks to provide a method for selective image signal processing based on virtual superimposition. An aim of the present disclosure is to provide a solution that overcomes at least partially the problems encountered in prior art.

In one aspect, an embodiment of the present disclosure provides a system comprising:
an image sensor comprising a plurality of pixels arranged on a photo-sensitive surface thereof; and
an image signal processor configured to:
   - receive, from the image sensor, a plurality of image signals captured by corresponding pixels of the image sensor; and
   - process the plurality of image signals to generate at least one image, wherein, when processing, the image signal processor is configured to:
      - determine at least one region within the photo-sensitive surface that corresponds to an image segment of the at least one image over which a blend object is to be superimposed; and
      - selectively perform a sequence of image signal processes on a given image signal and control a plurality of parameters employed for performing the sequence of image signal processes, based on whether a given pixel that is employed to capture the given image signal lies in the at least one region or a remaining region within the photo-sensitive surface.

In another aspect, an embodiment of the present disclosure provides a method for selective image signal processing, via a system comprising an image sensor, wherein the image sensor comprises a plurality of pixels arranged on a photo-sensitive surface thereof, the method comprising:
- receiving, from the image sensor, a plurality of image signals captured by corresponding pixels of the image sensor; and
- processing the plurality of image signals to generate at least one image by:
   - determining at least one region within the photo-sensitive surface that corresponds to an image segment of the at least one image over which a blend object is to be superimposed; and
   - selectively performing a sequence of image signal processes on a given image signal and controlling a plurality of parameters employed for performing the sequence of image signal processes, based on whether a given pixel that is employed to capture the given image signal lies in the at least one region or a remaining region within the photo-sensitive surface.

Embodiments of the present disclosure substantially eliminate or at least partially address the aforementioned problems in the prior art, and enable efficient selective image signal processing based on virtual superimposition to generate highly immersive and realistic images, in a manner that the image signal processor is not excessively computationally overburdened.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1 illustrates a block diagram of an architecture of a system, in accordance with an embodiment of the present disclosure;
- FIG. 2A illustrates an image generated by an image signal processor, while FIG. 2B illustrates an image sensor, in accordance with an embodiment of the present disclosure;
- FIGs. 3A and 3B illustrate process flows in an image signal processor, in accordance with different embodiments of the present disclosure;
- FIGs. 4A and 4B illustrate two different blending techniques, in accordance with different embodiments of the present disclosure; and
- FIG. 5 illustrates steps of a method for selective image signal processing, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system comprising:
an image sensor comprising a plurality of pixels arranged on a photo-sensitive surface thereof; and
an image signal processor configured to:
   - receive, from the image sensor, a plurality of image signals captured by corresponding pixels of the image sensor; and
   - process the plurality of image signals to generate at least one image, wherein, when processing, the image signal processor is configured to:
      - determine at least one region within the photo-sensitive surface that corresponds to an image segment of the at least one image over which a blend object is to be superimposed; and
      - selectively perform a sequence of image signal processes on a given image signal and control a plurality of parameters employed for performing the sequence of image signal processes, based on whether a given pixel that is employed to capture the given image signal lies in the at least one region or a remaining region within the photo-sensitive surface.

In another aspect, an embodiment of the present disclosure provides a method for selective image signal processing, via a system comprising an image sensor, wherein the image sensor comprises a plurality of pixels arranged on a photo-sensitive surface thereof, the method comprising:
- receiving, from the image sensor, a plurality of image signals captured by corresponding pixels of the image sensor; and
- processing the plurality of image signals to generate at least one image by:
   - determining at least one region within the photo-sensitive surface that corresponds to an image segment of the at least one image over which a blend object is to be superimposed; and
   - selectively performing a sequence of image signal processes on a given image signal and controlling a plurality of parameters employed for performing the sequence of image signal processes, based on whether a given pixel that is employed to capture the given image signal lies in the at least one region or a remaining region within the photo-sensitive surface.

The present disclosure provides the aforementioned system incorporating selective image signal processing based on virtual superimposition and the aforementioned method for selective image signal processing based on virtual superimposition. Based on where the blend object is to be superimposed over the at least one image, a particular sequence of image signal processes is performed on the given image signal and the plurality of parameters are controlled (namely, modified or adjusted) accordingly to provide a particular type and extent of processing for the given image signal when generating the at least one image. In particular, when the given image signal corresponds to the image segment upon with the blend object is to be superimposed, the given image signal is processed lightly; otherwise, the given image signal is processed relatively heavily. Therefore, different image signals corresponding to different parts of the at least one image are processed differently (i.e., in a non-uniform manner), as per requirement, to generate suitable visually appealing image(s). In such a case, the at least one image signal processor selectively (i.e., customisably) performs image signal processing in a manner that image signal processor overburdening, delays, and excessive power consumption are avoided. In this regard, conservation and utilization of processing resources of the at least one image signal processor is optimized. The at least one image signal processor can be judiciously used to also perform other processing tasks, if required. This facilitates an increase in overall efficiency of the at least one image signal processor, reduces computational and processing resource requirements, latency and power consumption, and ultimately reduces cost of the system. The method is fast, effective, reliable and can be implemented with ease.

Throughout the present disclosure, the term "*image sensor*" refers to a device that detects light from a real-world environment at the photo-sensitive surface thereof, thereby enabling the plurality of pixels arranged on the photo-sensitive surface to capture the plurality of image signals. The plurality of image signals are electrical signals pertaining to a real-world scene of the real-world environment. It will be appreciated that the light entering the image sensor optionally passes through a colour filter array and is then captured as the plurality of images signals by the plurality of pixels at an input interface of the image sensor. The input interface is based, for example, on a Mobile Industry Processor Interface (MIPI) specification. Examples of the image sensor include, but are not limited to, a charge-coupled device (CCD) image sensor, and a complementary metal-oxide-semiconductor (CMOS) image sensor.

It will be appreciated that the plurality of pixels could be arranged in a required manner (for example, such as a rectangular two-dimensional (2D) grid, a polygonal arrangement, a circular arrangement, an elliptical arrangement, a freeform arrangement, and the like) on the photo-sensitive surface of the image sensor. In an example, the image sensor may comprise 9 pixels M1, M2, M3, M4, M5, M6, M7, M8, and M9 arranged in the rectangular 2D grid on the photo-sensitive surface. Herein, the 9 pixels M1, M2, M3, M4, M5, M6, M7, M8, and M9 of the image sensor may capture 9 image signals N1, N2, N3, N4, N5, N6, N7, N8, and N9, respectively. Optionally, an aspect ratio of a given pixel is different for different regions within the photo-sensitive surface. The aspect ratio of the given pixel refers to a ratio of a width of the given pixel to a height of the given pixel. For some regions within the photo-sensitive surface, a given pixel could have a high aspect ratio (such as 2:1), while for other regions within the photo-sensitive surface, a given pixel could have a low aspect ratio (such as 1:1). In this regard, a number pixels in one region may be different from a number pixels in another region. Optionally, the aspect ratio of the given pixel depends on a position of the given pixel on the photo-sensitive surface. As an example, pixels located at a central region within the photo-sensitive surface may have high aspect ratios. There could also be empty region(s) within the photo-sensitive surface where no pixel would be present.

It will be appreciated that the image sensor is a part of a camera. The camera could be arranged anywhere in the real-world environment where a user is present, or be arranged on a remote device (for example, a drone, a vehicle, a robot, and the like) present in the real-world environment, or be arranged on a head-mounted display (HMD) worn by the user on his/her head. Optionally, the camera is implemented as a visible light camera. Examples of the visible light camera include, but are not limited to, a Red-Green-Blue-Depth (RGB), a monochrome camera. It will be appreciated that the camera could be implemented as a combination of the visible light camera and a depth camera. Examples of the depth camera include, but are not limited to, a Red-Green-Blue-Depth (RGB-D) camera, a ranging camera, a Light Detection and Ranging (LiDAR) camera, a flash LiDAR camera, a Time-of-Flight (ToF) camera, a Sound Navigation and Ranging (SONAR) camera, a laser rangefinder, a stereo camera, a plenoptic camera, an infrared camera, a structured-light scanner, and an ultrasound imaging equipment. For example, the camera may be implemented as the stereo camera.

Throughout the present disclosure, the term "*image signal processor*" refers to hardware, software, firmware or a combination of these responsible for processing the plurality of image signals to generate the at least one image. The image signal processor controls operation of the aforementioned system. The image signal processor is communicably coupled to the image sensor wirelessly and/or in a wired manner. In an example, the image signal processor may be implemented as a programmable digital signal processor (DSP). In another example, the image signal processor may be implemented via a cloud server that provides a cloud computing service.

It will be appreciated that the at least one image represents the real-world scene of the real-world environment. In some implementations, the at least one image comprises a single image, whereas in other implementations, the at least one image comprises a plurality of images.

It will be appreciated that the generated at least one image is to be employed to produce at least one extended-reality (XR) image. The image signal processor generates the at least one image based on how the at least one image is to be further processed (i.e., how blend object superimposition is to be performed) to produce the at least one XR image. When producing the at least one XR image using the at least one image, the blend object is superimposed over the image segment of the at least one image. The term "*blend object*" encompasses a virtual object as well as a part or an entirety of another image that is to be superimposed over the image segment of the at least one image. The term "*virtual object*" refers to a computer-generated object (namely, a digital object). Examples of the virtual object may include, but are not limited to, a virtual navigation tool (such as a virtual map, a virtual direction signage, and so forth), a virtual gadget (such as a virtual calculator, a virtual computer, and so forth), a virtual message (such as a virtual instant message, a virtual chat conversation, a virtual to-do note, and so forth), a virtual entity (such as a virtual person, a virtual animal, a virtual ghost, and so forth), a virtual entertainment media (such as a virtual painting, a virtual video, a virtual interactive advertisement, and so forth), a virtual vehicle or part thereof (such as a virtual car, a virtual cockpit, and so forth), and a virtual information (such as a virtual news description, a virtual announcement, virtual data, and so forth). Some areas in the at least one image are not important to be shown to the user, thus virtual object(s) may be superimposed over such areas. The blend object may include a real-world image, a point cloud, a depth map, a depth image, an Artificial Intelligence (AI) generated image, and the like. The real-world image may be captured by at least one camera. Such a real-world image could be re-projected, by the image signal processor, according a change in viewpoint and view direction of the camera and the at least one camera, when producing the at least one XR image. Such a process of producing the at least one XR image may also be referred to as fusion of the real-world image and the at least one image (particularly, the image segment of the at least one image). It will be appreciated that such a fusion process could also be performed using the AI generated image in a similar manner. When the blend object is the depth map or the depth image or the point cloud, the blend object may be utilized to upscale or downscale or warp the at least one image. The term "*extended-reality*" encompasses virtual reality (VR), augmented reality (AR), mixed reality (MR), and the like.

Throughout the present disclosure, the term "*image segment*" refers to a part of the at least one image over which the blend object is to be superimposed. It will be appreciated that the image segment may be a continuous image segment (i.e., all pixels over which the blend object is to be superimposed are located together in the at least one image) or a discontinuous image segment (i.e., all pixels over which the blend object is to be superimposed are located disjointly in the at least one image). It will be appreciated that a shape and a size of the image segment is determined according to a shape and a size of the blend object. Moreover, a location of the image segment in the at least one image corresponds to a required location of the blend object in the at least one XR image.

The at least one region within the photo-sensitive surface that corresponds to the image segment is determined by mapping the location of the image segment in the at least one image to corresponding pixels in the photo-sensitive surface. Optionally, the at least one region within the photo-sensitive surface comprises at least one pixel. In some implementations, the at least one region comprises a single pixel, whereas in other implementations, the at least one region comprises a plurality of pixels. It will be appreciated that a size and a shape of the at least one region corresponds to the shape and the size of the image segment.

Optionally, the image signal processor is configured to superimpose the blend object over the image segment of the at least one image, to produce the at least one XR image. In this regard, the XR image is produced by the image signal processor. In such a case, the image signal processor readily and accurately knows a location of the at least one region within the photo-sensitive surface that corresponds to the image segment of the at least one image over which the blend object is to be superimposed.

Alternatively, optionally, an external processor is configured to superimpose the blend object over the image segment of the at least one image, to produce the at least one XR image. In this regard, the at least one XR image is produced by the external processor. The external processor is communicably coupled to the image signal processor wirelessly and/or in a wired manner. The at least one image is communicated to the external processor by the image signal processor. In such a case, the external processor readily and accurately knows the location of the image segment of the at least one image over which the blend object is to be superimposed. Optionally, the image signal processor is configured to obtain, from the external processor, the location of the image segment of the at least one image over which the blend object is to be superimposed. In this regard, the image signal processor accurately maps the location of the image segment in the at least one image to the pixels of the at least one region within the photo-sensitive surface.

Optionally, the external processor is a processor of a display apparatus configured to present the at least one XR image. The term "*display apparatus*" refers to a display system that is configured to present an XR environment to the user when the display apparatus, in operation, is worn by the user on his/her head. The display apparatus may also be referred to as "*head-mounted display (HMD)*"*.* The XR environment is constituted by the at least one XR image. The processor of the display apparatus may be integrated in the display apparatus or may be implemented in a computer that is communicably coupled to the display apparatus.

Optionally, the display apparatus comprises at least one light source to display the at least one XR image. In this regard, the at least one light source could be implemented as at least one display or projector. Examples of a given display include, but are not limited to, a Liquid Crystal Display (LCD), a Light-Emitting Diode (LED)-based display, an Organic LED (OLED)-based display, a micro OLED-based display, an Active Matrix OLED (AMOLED)-based display, and a Liquid Crystal on Silicon (LCoS)-based display. Optionally, a given XR image is projected onto a projection screen or directly onto a retina of the user's eyes. Examples of a given projector include, but are not limited to, an LCD-based projector, an LED-based projector, an OLED-based projector, an LCoS-based projector, a Digital Light Processing (DLP)-based projector, and a laser projector.

Optionally, when superimposing the blend object over the image segment of the at least one image, the image signal processor or the external processor is configured to blend the blend object to the image segment of the at least one image. Such a blending could be performed by employing a binary blending technique, a linear blending technique, a Laplacian blending technique, and the like. The linear blending technique is often preferred over the binary blending technique, due to its high accuracy. It will be appreciated that such a blending allows for smooth and gradual transition between the blend object and the image segment of the at least one image in a manner that the produced at least one XR image appears realistic and immersive. The blending may be required due to a transition between an image data of the blend object and an image data of the at least one image, when superimposing the blend object over the image segment of the at least one image. Optionally, the image signal processor or the external processor is configured to blend and overlay the blend object to the image segment of the at least one image by employing alpha compositing. In this regard, there could be an alpha layer (of a given width) in a blending region between the blend object and the image segment of the at least one image. The alpha compositing is well known in the art. Upon superimposition of the blend object over the image segment, when the given image signal lies in the at least one region that corresponds to the image segment, the given image signal may require light processing or may not require processing at all. When the given image signal lies in the blending region (namely, an alpha mask area), the given image signal may require moderate processing or heavy processing.

Optionally, the image signal processor is configured to determine, for the given image signal to be processed, a position of the given pixel on the photo-sensitive surface that is employed to capture the given image signal. Optionally, in this regard, the at least one image signal processor is configured to sequentially scan the photo-sensitive surface via a serial interface controller. In such a case, a number of pixels that are scanned, along with their corresponding positions (namely, spatial positions) on the photo-sensitive surface, is accurately known to the at least one image signal processor via the serial interface controller. The count of the number of pixels that are scanned is associated with the positions of said pixels on the photo-sensitive surface. In an example, the serial interface controller could be an MIPI-Camera Serial Interface (MIPI-CSI^{®}) controller.

Notably, depending on where the given pixel lies on the photo-sensitive surface (i.e., in the at least one region or the remaining region), the sequence of image signal processes is selectively performed and the plurality of parameters are controlled (namely, modified or adjusted) to provide a requisite extent of processing for the given image signal. Beneficially, selectively performing the sequence of image signal processes and controlling the plurality of parameters employed therefor aims to reduce a computational burden on the image signal processor during processing of the plurality of image signals. This is because image signals captured by the pixels of the at least one region and image signals captured by pixels of the remaining region within the photo-sensitive surface may require different processing since these pixels would be viewed differently by the user in the at least one image. Moreover, selectively performing the sequence of image signal processes and controlling the plurality of parameters therefor optionally emulates image viewing quality and characteristics of human visual system in the at least one image, not just in terms of a spatial resolution, but also a colour resolution, a grayscale resolution, a colour accuracy, a luminance accuracy, an edge (spatial frequency) accuracy, a noise and temporal resolution, and the like.

In some implementations, the blend object to be superimposed is a transparent blend object or a translucent blend object. Upon superimposition of such a blend object over the image segment, the image segment would only be partially obscured and a portion of the real-world scene corresponding to the image segment would still be visible in the at least one image. In such a case, when the given image signal lies in the at least one region, the given image signal is to be lightly processed to adequately represent said portion of the real-world scene in the at least one image. Therefore, a requisite sequence of image signal processes is performed on the given image signal and the plurality of parameters are controlled accordingly, to provide a low extent of processing (i.e., light processing) for the given image signal when generating the at least one image. It will be appreciated that the translucent blend object may be associated with a virtual lighting or a virtual shadow. Such a virtual lighting or a virtual shadow could be large in size and would also be superimposed over the image segment.

In other implementations, the blend object to be superimposed is an opaque object. Upon superimposition of such a blend object over the image segment, the image segment would be fully obscured and a portion of the real-world scene corresponding to the image segment would not be visible in the at least one image. In such a case, when the given image signal lies in the at least one region, the given image signal is not to be processed at all. Therefore, no sequence of image signal processes is performed on the given image signal and no parameters are controlled to provide a zero extent of processing (i.e., no processing) for the given image signal when generating the at least one image. Beneficially, this saves processing resources and processing time of the image signal processor.

It will be appreciated that when the given pixel lies in the remaining region, the given image signal captured by the given pixel is to be heavily processed, as the given image signal is to be definitely utilized to represent corresponding visual information of the real-world scene in the at least one image.

It will be appreciated that a heavy processing of a given image signal means, for example, that a high number of image signal processes are employed for processing the given image signal and/or a plurality of parameters employed for performing a sequence of such image signal processes on the given image signal are highly (accurately, precisely, and gradually) controlled, such as for changing, modifying or filtering the given image signal. The heavy processing of the given image signal could also mean that an extent of filtering or alteration is performed on the given image signal in a manner that an image quality parameter, such as a peak signal-to-noise ratio (PSNR) is highly improved. Likewise, a light processing of a given image signal means, for example, that a low number of image signal processes are employed for processing the given image signal and/or a plurality of parameters employed for performing a sequence of such image signal processes on the given image signal are lightly or moderately controlled. As an example, the light processing of the given image signal may be performed by reducing a search window (namely, a search range) and increasing a pixel step. By reducing the search window, a number of areas to be searched and processed would be reduced.

It will be appreciated that in the image signal processor, the plurality of parameters employed for performing the sequence of image signal processes, are optionally controlled by a control module. In this regard, the control module is a part of the image signal processor. The control module receives as input, one or more input factors (such as information indicative of a gaze direction of the user) from another module (such as gaze-tracking system).

Optionally, the image signal processor comprises a plurality of hardware blocks, wherein a given hardware block is configured to perform a given image signal process or a processing step of a given image signal process from amongst the sequence of image signal processes. The given image signal process has at least one processing step. Optionally, the plurality of hardware blocks are associated with separate switches, wherein a given switch activates the given hardware block to perform the given image signal process, based on whether the given pixel lies in the at least one region or the remaining region. In such a case, each hardware block is separately controllable. Alternatively, optionally, an entirety of the plurality of hardware blocks are associated with a single switch, wherein the single switch activates the entirety of the plurality of hardware blocks to perform the sequence of image signal processes, based on whether the given pixel lies in the at least one region or the remaining region. In such a case, all the hardware blocks are controlled in a similar manner. These implementations of the plurality of hardware blocks are feasible because the plurality of hardware blocks could be implemented using silicon chips, which are cheap and provide fast processing.

Examples of the given image signal process include, but are not limited to, black level correction, defective pixel correction (DPC), Bayer domain denoising, lens shading correction, scaling, automatic white balance gain adjustment, demosaicking, automatic white balance static parameters adjustment, colour conversion matrix interpolation, autofocus, auto exposure, gamma correction, colour space conversion, luma and chroma denoising, sharpening and edge enhancement, contrast adjustment, shot noise correction, chromatic aberration correction, alpha compositing, reprojection, cropping, and resizing. As an example, the given image signal process may be the DPC, having two processing steps that are defective pixel detection (DPD), and subsequently either noise cleaning or defective pixel cancellation.

Examples of the plurality of parameters include, but are not limited to, colour conversion matrix, colour temperature, scaling factor, shutter speed, lens aperture, pixel intensity, pixel size, an amount of shading, denoising factor, a search window, a number of colour planes or pixels to be processed, a pixel step, a pixel granularity, a number of iterations, a sigma value, a sigma space value, a sigma colour value, a number of statistical factors, a number of digits, a magnitude of a gain, a threshold value, a width of a template window, a length of a template window, a width of kernel, a length of kernel, and a number of pyramid layers. It will be appreciated that a given parameter is employed during a corresponding image signal process of the aforementioned sequence. When performing the corresponding image signal process on the given image signal, the given parameter is taken into account.

In an example, when the real-world environment has an excessively bright lighting condition, a group of pixels that are positioned on the image sensor to capture this excessive light may become saturated. In such a case, shutter speed and/or lens aperture of the at least one camera may be reduced to prevent this saturation of said group of pixels. In another example, another image signal process that may be performed for image signals captured by said group of pixels is auto white balance, wherein colour temperature of the scene is estimated by analysing a histogram of said group of pixels and a closest matching colour temperature of the lighting condition is used as a correction for auto white balance. In yet another example, when performing black level correction, a pixel intensity of the given pixel that is employed to capture the given image signal is controlled.

Optionally, the plurality of parameters comprise a given colour conversion matrix that is to be employed for processing the given image signal, wherein, when controlling the plurality of parameters, the image signal processor is configured to employ a first colour conversion matrix and a second colour conversion matrix for processing image signals captured by pixels of the at least one region and image signals captured by pixels of the remaining region, respectively, wherein coefficients in the second colour conversion matrix are higher than coefficients in the first colour conversion matrix.

The given colour conversion matrix is employed to convert colour values of image signals captured by pixels of a given region to requisite colour values in a given colour space. In this regard, coefficients in the given colour conversion matrix are multiplied by the colour values of image signals to yield the requisite colour values in the given colour space. The requisite colour values in the given colour space are then utilized to generate the at least one image that is to be displayed by the at least one light source. In a first example, the given colour conversion matrix may be a 3x3 matrix, the colour values of the given image signal may be represented in form of a 3x1 matrix, and the requisite colour values of the given image signal in the given colour space may be yielded in form of a 3x1 matrix. Optionally, the image signal processor employs at least one mathematical formula for the aforesaid multiplication. It will be appreciated that colour values of different image signals could be converted to requisite colour values in different colour spaces. Optionally, a given colour space is one of: a standard Red-Green-Blue (sRGB) colour space, an RGB colour space, Luminance and two colour differences (YUV) colour space, a Hue-Chroma-Luminance (HCL) colour space, a Hue-Saturation-Lightness (HSL) colour space, a Hue-Saturation-Brightness (HSB) colour space, a Hue-Saturation-Value (HSV) colour space, Luminance, a Hue-Saturation-Intensity (HSI) colour space, blue-difference and red-difference chroma components (YCbCr) colour space. It will be appreciated that the at least one light source has a standardised colour space with a white point (such as D65 for the sRGB colour space) and a colour temperature (such as 6500 Kelvin for the sRGB colour space). In an example, colour values of the image signals captured by pixels of the remaining region may belong to the RGB colour space and the requisite colour values corresponding to a given light source may belong the sRGB colour space. A given colour conversion matrix could also be employed to enhance memory colours.

It will be appreciated that the coefficients in the second colour conversion matrix are optionally higher than the coefficients in the first colour conversion matrix because visual information of the real-world scene corresponding to the image signals captured by pixels of the remaining region is to be represented with higher visual quality in the at least one image as compared to visual information of the real-world scene corresponding to the image signals captured by pixels of the at least one region. As the coefficients in the second colour conversion matrix are optionally higher than the coefficients in the first colour conversion matrix, a colour processing for the remaining region is higher than a colour processing for the at least one region. As a result, a portion of the at least one image corresponding to the remaining region has a high colour-fidelity (i.e., minimal colour error) and a portion of the at least one image corresponding to the at least one region has a low noise and a low colour-fidelity. It will be appreciated that a variable colour-fidelity in the generated at least one image enables the image signal processor to employ and conserve its processing resources variably and efficiently.

Optionally, the coefficients in the given colour conversion matrix lie in a range of -4 to 4. More optionally, the coefficients in the given colour conversion matrix lie in a range of -3 to 3. Yet more optionally, the coefficients in the given colour conversion matrix lie in a range of -2 to 2. As an example, the coefficients in the given colour conversion matrix may be from -4, -3.8, -3.6, -3.4, -3.2, -3, -2.8, -2.6, -2.4, -2.2, -2, -1.8, -1.6, -1.4, -1.2, -1, -0.8, -0.6, -0.4, -0.2, 0, 0.2, 0.4, 0.6, 0.8, 1, 1.2, 1.4, 1.6, 1.8, 2, 2.2, 2.4, 2.6, 2.8, 3, 3.2, 3.4, 3.6 or 3.8 up to -3.8, - 3.6, -3.4, -3.2, -3, -2.8, -2.6, -2.4, -2.2, -2, -1.8, -1.6, -1.4, -1.2, -1, - 0.8, -0.6, -0.4, -0.2, 0, 0.2, 0.4, 0.6, 0.8, 1, 1.2, 1.4, 1.6, 1.8, 2, 2.2, 2.4, 2.6, 2.8, 3, 3.2, 3.4, 3.6, 3.8 or 4. Other coefficients in the given colour conversion matrix that lie within and outside the aforesaid ranges are also feasible. Referring to the first example, coefficients in the given colour conversion matrix may be 2.071, -0.711, -0.360, -0.504, 1.864, - 0.361, -0.446, -1.825, 3.272.

When the coefficients in the second colour conversion matrix are high, digital gains of the image signals captured by pixels of the remaining region are also high. In such a case, noise (for example, a luminance noise, a chrominance noise, or similar) in said image signals would get amplified. Such a noise produces undesirable visual effects (such as high-amplitude-coloured blobs) in the image signals captured by pixels of the remaining region despite the high colour-fidelity. Optionally, the image signal processor is configured to attenuate the noise by employing at least one of: a denoising technique, a high dynamic range (HDR) tone-mapping technique, a high exposure time, an F-number adjustment technique, an image stabilization technique. Such a manner of attenuating noise requires considerable processing resources of the image signal processor. Therefore, the noise attenuation is only optionally performed when processing the image signals captured by the pixels of the remaining region. Moreover, when the coefficients in the first colour conversion matrix are low (for example, the coefficients are equal to or nearly equal to 1), digital gains of the image signals captured by the pixels of the at least one region are also low. In such a case, the noise in said image signals is minimal as F-number diminishes, for example, from F2.8 to F2.0, and therefore may not require further processing.

It will be appreciated that optionally the given colour conversion matrix that is to be employed for processing the given image signal depends on a type of the at least one light source. In an example, a gamut display may require a colour conversion matrix with low coefficients. When there is a plurality of light sources, other parameters thereof may be taken into account for required coefficients in the given colour conversion matrix. Coefficients in the given colour conversion matrix may depend on a transparent blending region between the blend object and the image segment of the at least one image. In such a case, these coefficients could be estimated using a linear interpolation, based on alpha layer (having transparency values of pixels) in the transparent blending region.

Optionally, the image signal processor is configured to analyse a given image to select a requisite colour conversion matrix from amongst a plurality of colour conversion matrices. This requisite colour conversion matrix may be employed for generating at least one subsequent image of the given image. The plurality of colour conversion matrices may be stored at a data repository coupled in communication with the image signal processor. Said analysis could be done for example, by calculating a histogram of colours in the given image, by estimating a colour temperature of the given image using chromaticity (RG/BG colour values) and the automatic white balance. This analysis could be performed intermittently (at regular or irregular intervals) for example, after every 100 images, then 150 images, or so. Prior to this analysis, the given image (or its statistics) may be downscaled. Moreover, a selection of the requisite colour conversion matrix from amongst the plurality of colour conversion matrices may be based on the statistics of the given image.

Optionally, the image signal processor is configured to provide separate processing pipeline paths with different sequences of image signal processes for image signals captured by pixels of the at least one region and image signals captured by pixels of the remaining region. In this regard, the image signals captured by pixels of the at least one region and the image signals captured by pixels of the remaining region are processed differently and to different extents, using the separate processing pipeline paths. Optionally, the separate processing pipeline paths are provided by way of separate hardware blocks. The different sequences of image signal processes may have a different number of image signal processes and/or a different order of image signal processes. As an example, the image signal processor may be configured to provide a first processing pipeline path comprising 2 image signal processes for processing the image signals captured by the pixels of the at least one region, and a second processing pipeline path comprising 6 image signal processes for processing the image signals captured by the pixels of the remaining region. For any given image signal process that is to be performed for both the image signals captured by the pixels of the at least one region and the image signals captured by the pixels of the remaining region, requisite parameters employed for performing the given image signal process could be controlled differently. For example, different colour conversion matrices (having different coefficients) may be employed for processing the image signals captured by the pixels of the at least one region and the image signals captured by the pixels of the remaining region differently.

Optionally, the image signal processor is configured to selectively perform the sequence of image signal processes and control the plurality of parameters employed therefor, further based on whether or not the given image signal represents a part of a salient feature in the at least one image. Optionally, in this regard, the plurality of parameters comprise a given colour conversion matrix that is to be employed for processing the given image signal. When the given image signal represents the part of the salient feature, the image signal processor is configured to select the given colour conversion matrix to provide a high colour-fidelity to the part of the salient feature represented by the given image signal. Such a given colour conversion matrix has high coefficients. This is because the salient features in the at least one image are visually alluring (namely, have high saliency), and the user is more likely to focus on the salient features as compared to other features in the at least one image. Therefore, such salient features should have a high visual quality in the at least one image. For example, the user is more likely to focus on an edge, a corner, or a high-frequency texture detail as compared to interior features or low-frequency texture detail, since the former types of features are more visually alluring compared to the latter. When the given image signal does not represent the part of the salient feature, the image signal processor is configured to select a requisite colour conversion matrix to provide a low colour-fidelity.

Optionally, the image signal processor is configured to assign a saliency score to the salient feature in the at least one image. This saliency score is used by the image signal processor to determine an extent of colour-fidelity required for the salient feature in the at least one image. Greater the saliency score, greater is the extent of colour-fidelity required for the salient feature in the at least one image, and vice versa. Optionally, the saliency score lies in a range of 0 to 1. For example, the saliency score may be from 0, 0.1, 0.2, 0.3, 0.4, 0.5, 0.6, 0.7, 0.8 or 0.9 up to 0.1, 0.2, 0.3, 0.4, 0.5, 0.6, 0.7, 0.8, 0.9 or 1. Other ranges of the saliency score are also feasible. Optionally, when assigning the saliency score to the salient feature in the at least one image, the image signal processor is configured to employ at least one of: a psycho-visual factor, an artificial intelligence (AI) algorithm.

It will be appreciated that when a size of the image sensor is very large (for example, the image sensor has 100 million pixels), scaling process is required to be performed for the image signals captured by the plurality of pixels of the image sensor. In such a case, the scaling process may employ a high scaling factor. During the scaling process, image signals representing the salient feature (for example, a slanted edge) could be scaled in various manners. In an example, the image signals representing the salient feature and neighbouring pixels of the salient feature may be averaged together. In another example, one image signal from amongst the image signals representing the salient feature and neighbouring pixels of the salient feature may be selected as a scaled image signal. In yet another example, the image signals representing the salient feature and neighbouring pixels of the salient feature may be processed using a requisite mathematical and/or analytical function to obtain a scaled image signal.

Optionally, the image signal processor is configured to:
- identify a gaze position on the photo-sensitive surface, based on a gaze direction of a user; and
- selectively perform the sequence of image signal processes on the given image signal and control the plurality of parameters employed therefor, further based on whether or not the given pixel lies within a predefined distance from the gaze position.

Optionally, the image signal processor is configured to map the gaze direction of the user onto the photo-sensitive surface, for identifying the gaze position on the photo-sensitive surface. The term "*gaze position*" refers to a position on the photo-sensitive surface onto which the gaze direction is mapped.

In some implementations, the gaze direction and the gaze position are identified by default. In this regard, the gaze position is identified in a default (namely, fixed) manner to lie at a centre of the photo-sensitive surface. Generally, a user's gaze is directed towards a centre of his/her field of view. When the user wishes to view objects in a periphery of his/her field of view, the user typically turns his/her head in a manner that said objects lie at a centre of his/her current field of view. In such a case, the central portion of the user's field of view is resolved to a much greater degree of visual detail by the visual system of the user's eye, as compared to the peripheral portion of the user's field of view. The aforesaid default manner of identifying the gaze position emulates a way in which users generally (i.e., by default) focus within their field of view. In other implementations, the gaze direction and the gaze position are identified by tracking the user's gaze. In this regard, the gaze position is dynamically identified, based on the (tracked) gaze direction, by dynamically mapping the gaze direction onto the photo-sensitive surface for identifying the gaze position. Such a dynamic manner of identifying the gaze position emulates a way in which the user actively focuses within his/her field of view. Optionally, a gaze tracking system is employed for tracking the user's gaze. In yet other implementations, the gaze direction and the gaze position are identified by prediction. In this regard, the prediction could be done based on motion of the user's gaze. In such a case, the motion of the user's gaze could be determined in terms of velocity and/or acceleration of the user's gaze, using information indicative of at least one previous gaze direction of the user and current gaze direction of the user.

Optionally, the predefined distance of the given pixel from the gaze position lies in a range of 3 degrees to 90 degrees from the gaze position. As an example, the predefined distance of the given pixel may be from 3, 6, 9, 12, 15, 18, 21, 24, 27, 30, 33, 36, 39, 42, 45, 48, 51, 54, 57, 60, 63, 66, 69, 72, 75, 78, 81, 84 or 87 degrees up to 6, 9, 12, 15, 18, 21, 24, 27, 30, 33, 36, 39, 42, 45, 48, 51, 54, 57, 60, 63, 66, 69, 72, 75, 78, 81, 84, 87 or 90 degrees from the gaze position. When the given pixel lies within the predefined threshold distance from the gaze position, the given image signal is to be heavily processed, whereas when the position of the given pixel lies outside the predefined threshold distance from the gaze position, the given image signal is to be lightly processed. In other words, pixels lying in a vicinity of the gaze position would be heavily processed as compared to remaining pixels that lie away from the gaze position. This is because pixels lying within the predefined distance from the gaze position would be perceived in the at least one image with high visual acuity by foveae of the user's eye, as compared to pixels lying outside the predefined distance from the gaze position. Beneficially, in such a case, the generated at least one image emulates image viewing quality and characteristics of human visual system as a higher visual quality is provided for gaze-proximal pixels (i.e., pixels lying within the predefined distance from the gaze position) of the remaining region of the at least one image as compared to that for non-gaze-proximal pixels (i.e., pixels lying outside the predefined distance from the gaze position). Depending on where the given pixel lies with respect to the predefined distance (i.e., near to the gaze position or far from the gaze position), a requisite sequence of image signal processes is performed on the given image signal and the plurality of parameters are controlled accordingly to provide a requisite extent of processing for the given image signal. Optionally, the image signal processor is configured to receive, from a display apparatus, information indicative of the gaze direction of the user. Optionally, the display apparatus comprises the gaze-tracking system for tracking the gaze direction of the user, wherein the gaze-tracking system is communicably coupled to the image signal processor. The term "*gaze-tracking system*" refers to a specialized equipment for detecting and/or following gaze of the user, when the display apparatus in operation is worn by the user. The gaze-tracking system could be implemented as contact lenses with sensors, cameras monitoring a position of a pupil of the user's eye, and the like. Such gaze-tracking systems are well-known in the art. The gaze-tracking system is configured to collect gaze-tracking data, which constitutes the information indicative of the gaze direction of the user. Then, the gaze-tracking system sends the gaze-tracking data (i.e., said information) to the image signal processor. It will be appreciated that the gaze-tracking data is collected repeatedly by the gaze-tracking system throughout a given session of using the display apparatus, as gaze of the user's eyes keeps changing whilst he/she uses the display apparatus. An up-to-date gaze-tracking data (indicative of the gaze direction of the user) allows for producing an up-to-date gaze-contingent image. Moreover, the information indicative of the gaze direction of the user could also be utilized to predict the gaze direction and the gaze position.

Optionally, the image signal processor is configured to predict the gaze direction of the user, based on a position of the image segment in the at least one image over which the blend object is to be superimposed. In this regard, if the at least one image over which the blend object is to be superimposed was displayed at the display apparatus, the user would be likely to direct his/her gaze towards the position of the image segment in the at least one image over which the blend object is superimposed. The (predicted) gaze direction lies towards the position of the image segment, as the blend object (such as the virtual object) is visually alluring and is likely to attract the user's attention. In an example, when the position of the image segment over which the blend object is to be superimposed is at a top right region of the at least one image, the image signal processor may be configured to predict the gaze direction of the user to lie towards a top right region of the photo-sensitive surface. It will be appreciated that when the image signal processor is configured to predict the gaze direction of the user, the image signal processor pre-emptively determines where the gaze direction of the user is going to be at a next moment. In such a case, the image signal processor is configured to perform the sequence of image signal processes on the given image signal and control the plurality of parameters employed therefor accordingly in a manner that the at least one image is generated with minimal latency. It will also be appreciated that the image signal processor is configured to perform a requisite sequence of image signal processes and control the plurality of parameters therefor, to provide a high extent of processing for a given image signal that is captured by a given pixel lying in a given region neighbouring the at least one region that corresponds to the image segment over which the blend object is to be superimposed.

Optionally, when selectively performing the sequence of image signal processes, the image signal processor is configured to:
- perform local contrast enhancement on the given image signal when the given pixel lies in the remaining region, but within the predefined distance from the gaze position; and
- perform global contrast enhancement on the given image signal when the given pixel lies in the remaining region, but does not lie within the predefined distance from the gaze position.

In this regard, the given image signal captured by the given pixel lying in the remaining region, but within the predefined distance from the gaze position, is processed heavily by way of performing the local contrast enhancement to achieve a higher contrast quality as compared to the image signals captured by pixels lying in the remaining region, but outside the predefined distance from the gaze position. This is because local contrast details (namely, per-pixel contrast details) within the predefined distance from the gaze position are extremely important, and thus the local contrast enhancement is performed on a per-pixel basis for image signals captured by pixels lying in the remaining region, but within the predefined distance. A local contrast value may be determined for the given image signal captured by the given pixel that lies in the remaining region, but within the predefined distance. Optionally, when performing the local contrast enhancement on the given image signal, the image signal processor is configured to employ a histogram equalization technique. Moreover, the image signals captured by the pixels that lie in the remaining region, but outside the predefined distance, are processed lightly by way of performing the global contrast enhancement as a lower contrast quality is acceptable outside the predefined distance from the gaze direction. Beneficially, this saves processing resources and processing time of the image signal processor. A single global contrast value may be determined corresponding to all pixels of the remaining region lying outside the predefined distance. Optionally, when performing the global contrast enhancement on the given image signal, the image signal processor is configured to employ at least one of: the histogram equalization technique, a gamma correction technique, a histogram stretching technique, a histogram shrinking technique, a tone-mapping technique, the HDR tone-mapping technique. The global contrast enhancement is less computationally intensive as compared to the local contrast enhancement.

It will be appreciated that image enhancements (such as contrast enhancements) performed by the image signal processor are related to a capability of the human visual system for detecting contrast, brightness, shadows, colour intensities in a non-linear power law manner.

Beneficially, such a manner of contrast enhancement (namely, the local contrast enhancement or the global contrast enhancement) depending on a position of the given pixel (within the predefined distance or outside the predefined distance) emulates visual acuity characteristics of human visual system. In the at least one image generated using such a manner of contrast enhancement, a higher contrast quality is provided for the gaze-proximal pixels of the remaining region of the at least one image as compared to that for the non-gaze-proximal pixels of the remaining region of the at least one image. Therefore, upon displaying the at least one XR image produced using the at least one image, there is beneficially provided immersiveness and realism to the user within the XR environment. Moreover, the image signal processor performs such a manner of varying contrast enhancement to provide optimal contrast in the at least one image, even for a real-world environment with varying lighting conditions.

Optionally, when selectively performing the sequence of image signal processes, the image signal processor is configured to perform sharpening and edge enhancement on the given image signal when the given pixel lies in the remaining region, but within the predefined distance from the gaze position. When the given pixel lies in the remaining region, but within the predefined distance from the gaze position, features (such as edges, boundaries, mid-frequency features, high-frequency features, and the like) captured in the given image signal are required to be represented as sharp and/or embossed features in the at least one image, in order to bring focus cues and/or depth cues to the user's eyes when the user views the at least one image (or the at least one XR image produced using the at least one image). When the sharpening and the edge enhancement processes are performed on the given image signal, visual details of the features are enhanced to match a human eye response contrast curve. The sharpening and the edge enhancement processes also facilitate in attenuation of noise in the gaze-proximal pixels of the remaining region of the at least one image, and thus a high visual quality is achieved for such pixels. Moreover, when the sharpening and the edge enhancement processes are performed on the image signals captured by pixels lying in the remaining region, but outside the predefined distance from the gaze position, undesirable noise would be produced in these image signals, which results in poor visual quality in the at least one image. This subsequently leads to lack of immersion and abstractedness for the user when the user views the at least one image. Therefore, the sharpening and the edge enhancement processes are not performed on the image signals captured by pixels lying in the remaining region, but outside the predefined distance from the gaze position. Beneficially, in such a case, processing resources of the image signal processor can be optimally utilized to only perform the sharpening and the edge enhancement process on the given pixel that lies in the remaining region, but within the predefined distance from the gaze position.

Optionally, when selectively performing the sequence of image signal processes on the given image signal, the image signal processor is configured to perform at least one of: local and global brightness correction, local and global HDR tone-mapping, local and global false colour correction, local and global memory colour enhancement, based on whether or not the given pixel lies within the predefined distance from the gaze position.

Typically, a human eye can detect a few levels (for example, 100 levels or shades) of gray colour and many levels of other remaining colours (such as red colour, green colour, and the like). Moreover, the human eye can perceive a given colour differently when the given colour has different brightness levels. Thus, colour errors need to rectified properly, (especially for the mid-frequency features captured in the given image signal) when generating the at least one image. Optionally, in this regard, when selectively performing the sequence of image signal processes, the image signal processor is configured to perform local and global colour error correction on the given image signal.

The present disclosure also relates to the method as described above. Various embodiments and variants disclosed above, with respect to the aforementioned first aspect, apply *mutatis mutandis* to the method.

Optionally, the method further comprises providing separate processing pipeline paths with different sequences of image signal processes for image signals captured by pixels of the at least one region and image signals captured by pixels of the remaining region.

Optionally, in the method, the step of selectively performing the sequence of image signal processes and controlling the plurality of parameters employed therefor, is further based on whether or not the given image signal represents a part of a salient feature in the at least one image.

Optionally, the method further comprises:
- identifying a gaze position on the photo-sensitive surface, based on a gaze direction of a user; and
- selectively performing the sequence of image signal processes on the given image signal and controlling the plurality of parameters employed therefor, further based on whether or not the given pixel lies within a predefined distance from the gaze position.

Optionally, the method further comprises receiving, from a display apparatus, information indicative of the gaze direction of the user.

Optionally, the method further comprises predicting the gaze direction of the user, based on a position of the image segment in the at least one image over which the blend object is to be superimposed.

Optionally, in the method, the step of selectively performing the sequence of image signal processes comprises:
- performing local contrast enhancement on the given image signal when the given pixel lies in the remaining region, but within the predefined distance from the gaze position; and
- performing global contrast enhancement on the given image signal when the given pixel lies in the remaining region, but does not lie within the predefined distance from the gaze position.

Optionally, in the method, the step of selectively performing the sequence of image signal processes comprises performing sharpening and edge enhancement on the given image signal when the given pixel lies in the remaining region, but within the predefined distance from the gaze position.

Optionally, in the method, the plurality of parameters comprise a given colour conversion matrix that is to be employed for processing the given image signal, wherein the step of controlling the plurality of parameters comprises employing a first colour conversion matrix and a second colour conversion matrix for processing image signals captured by pixels of the at least one region and image signals captured by pixels of the remaining region, respectively, wherein coefficients in the second colour conversion matrix are higher than coefficients in the first colour conversion matrix.

### DETAILED DESCRIPTION OF THE DRAWINGS

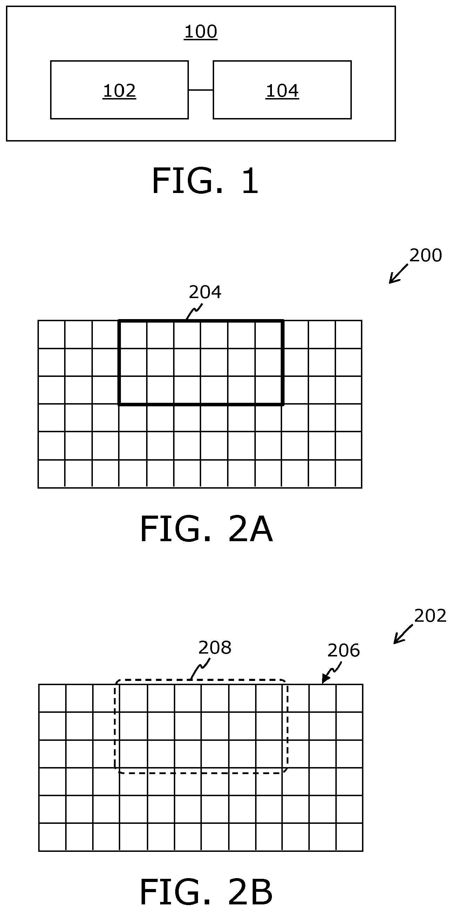

Referring to FIG. 1, illustrated is a block diagram of an architecture of a system **100**, in accordance with an embodiment of the present disclosure. The system **100** comprises an image sensor **102** and an image signal processor **104**. The image sensor **102** is coupled to the image signal processor **104**.

FIG. 1 is merely an example, which should not unduly limit the scope of the claims herein. It will be appreciated that the system **100** is provided as an example and is not to be construed as limiting the system **100** to specific numbers or types of components. A person skilled in the art will recognize many variations, alternatives, and modifications of embodiments of the present disclosure.

Referring to FIG. 2A and 2B, FIG. 2A illustrates an image **200** generated by an image signal processor (not shown), while FIG. 2B illustrates an image sensor **202**, in accordance with an embodiment of the present disclosure. A blend object (not shown) is to be superimposed over an image segment **204** of the image **200**. The image **200** is generated by processing a plurality of image signals that are captured by corresponding pixels arranged on a photo-sensitive surface **206** of the image sensor **202**. In FIG. 2B, there is also shown a region **208** within the photo-sensitive surface **206** that corresponds to the image segment **204** of the image **200** over which the blend object is to be superimposed.

FIGs. 2A and 2B are merely examples, which should not unduly limit the scope of the claims herein. A person skilled in the art will recognize many variations, alternatives, and modifications of embodiments of the present disclosure.

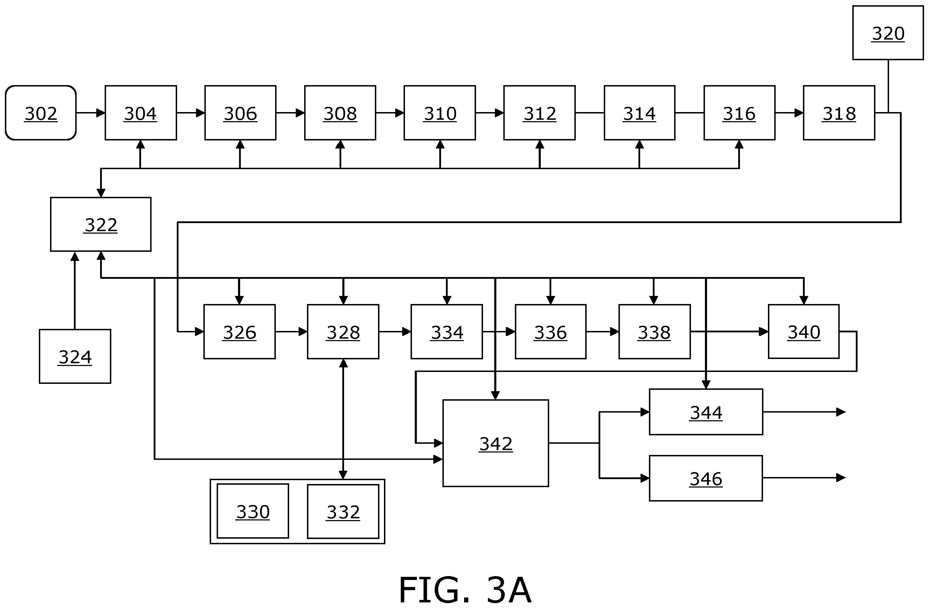

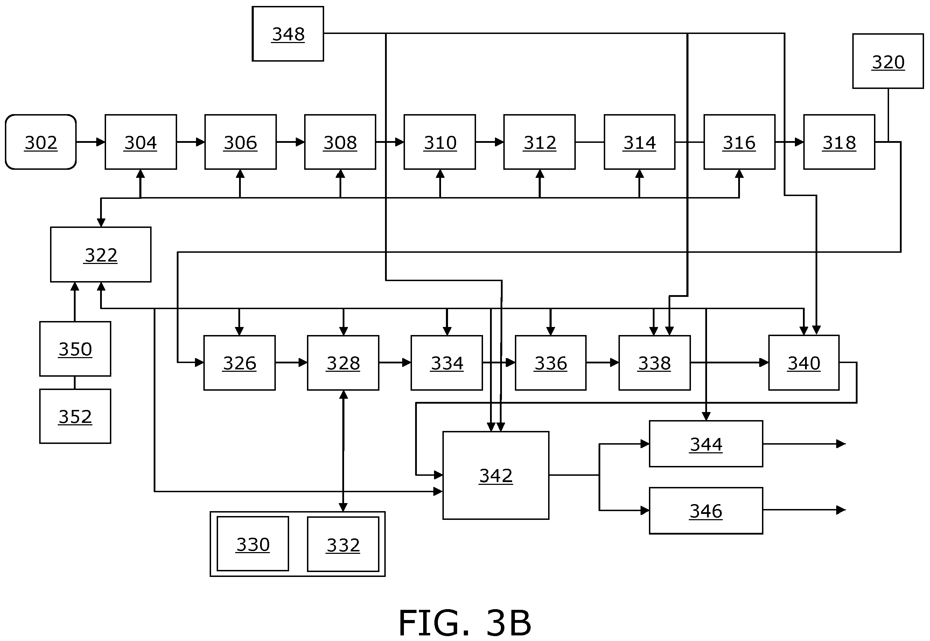

Referring to FIGs. 3A and 3B, illustrated are process flows in an image signal processor, in accordance with different embodiments of the present disclosure. Hardware elements involved in the process flows are depicted as blocks.

In FIG. 3A, light entering a given image sensor passes through a colour filter array **302** and is captured as images signals by pixels of the given image sensor, at an input interface **304** to the given image sensor. The input interface **304** is based, for example, on MIPI specification.

At **306**, the image signals undergo black level correction. Then, at **308**, the image signals undergo dead pixel detection (DPD) and dead pixel correction (DPC). Next, at **310**, the image signals undergo Bayer domain denoising. Thereafter, at **312**, the image signals undergo lens shading correction. Then, at **314**, the image signals undergo scaling, and at **316**, the image signals undergo automatic white balance gain adjustment. Next, at **318**, the image signals undergo demosaicking. After this, automatic white balance static parameters are applied to the image signals at **320**.

In the image signal processor, parameters employed for performing image signal processes are controlled by a control module **322**. The control module **322** receives as input, one or more input factors (such as information indicative of a gaze direction of a user, a rate at which a pose of the image sensor is changing while capturing the image signals, and the like) from a module **324**.

Next, a colour conversion matrix **326** and colour conversion matrix interpolation **328** are employed for processing the image signals. The colour conversion matrix interpolation **328** also involves autofocus **330** and/or auto exposure **332**. At **334**, the image signals undergo gamma correction. Next, at **336**, the image signals undergo colour space conversion, and at **338**, the image signals undergo luma and chroma denoising. Then, at **340**, the image signals undergo sharpening and edge enhancement. At **342**, the image signals are processed to obtain requisite contrast. Thereafter, the image signals undergo cropping and resizing at **344** and **346**.

In FIG. 3B, some blocks are similar to FIG. 3A, and are referenced by same numbers in FIG. 3B as in FIG. 3A. At **348**, a gaze tracking system is employed to identify a gaze position on the photo-sensitive surface, based on a gaze direction of a user. Then, the image signals undergo luma and chroma denoising (at **338**), the image signals undergo sharpening and edge enhancement (at **340**), and the image signals are processed to obtain requisite contrast (at **342**), based on the identified gaze position. At **350**, a test pattern is employed to give input to the control module **322**, and at **352**, a bypass is employed to bypass any block that need not be required when processing a given image signal.

FIG. 3A and 3B are merely examples, which should not unduly limit the scope of the claims herein. A person skilled in the art will recognize many variations, alternatives, and modifications of embodiments of the present disclosure. For example, the aforesaid processing operations may be selectively performed for the image signals in a manner that different sequences of processing operations are performed for different image signals.

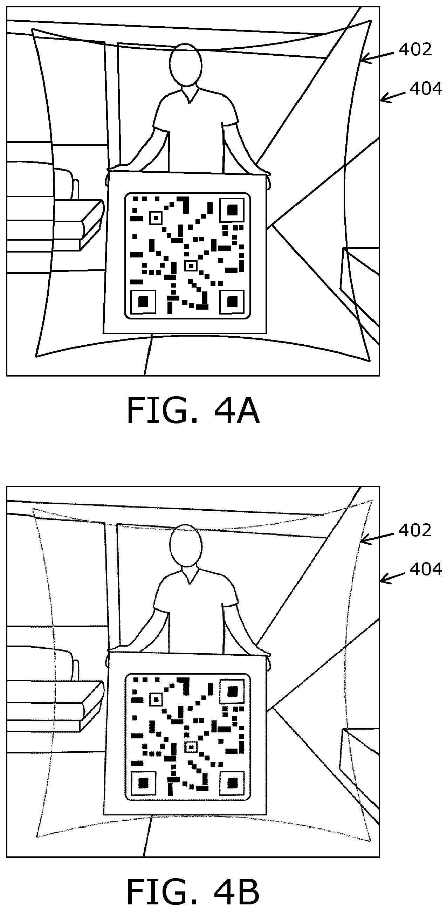

Referring to FIGs. 4A and 4B, illustrated are two different blending techniques, in accordance with different embodiments of the present disclosure.

In FIG. 4A, a binary blending technique is employed by an image signal processor (not shown) to blend a blend object **402** (depicted by a solid line pincushion shape) and an image segment of an image **404** generated by the image signal processor. Herein, the blend object **402** is a real-world image.

In FIG. 4B, a linear blending technique is employed by an image signal processor (not shown) to blend a blend object **402** (depicted by a hazed line pincushion shape) and an image segment of image **404** generated by the image signal processor. Herein, the blend object **402** is a real-world image.

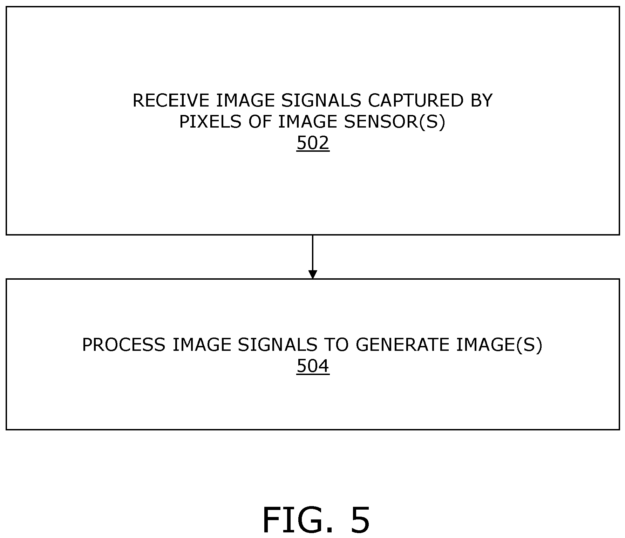

Referring to FIG. 5, illustrated are steps of a method for selective image signal processing, in accordance with an embodiment of the present disclosure. The method is performed via a system comprising an image sensor, wherein the image sensor comprises a plurality of pixels arranged on a photo-sensitive surface thereof. At step **502**, there are received, from the image sensor, a plurality of image signals captured by corresponding pixels of the image sensor. At step **504**, the plurality of image signals are processed to generate at least one image by: determining at least one region within the photo-sensitive surface that corresponds to an image segment of the at least one image over which a blend object is to be superimposed; and selectively performing a sequence of image signal processes on a given image signal and controlling a plurality of parameters employed for performing the sequence of image signal processes, based on whether a given pixel that is employed to capture the given image signal lies in the at least one region or a remaining region within the photo-sensitive surface.

The steps **502** and **504** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) comprising:
an image sensor (102, 202) comprising a plurality of pixels arranged on a photo-sensitive surface (206) thereof; and
an image signal processor (104) configured to:
- receive, from the image sensor, a plurality of image signals captured by corresponding pixels of the image sensor; and
- process the plurality of image signals to generate at least one image (200, 404), wherein, when processing, the image signal processor is configured to:
- determine at least one region (208) within the photo-sensitive surface that corresponds to an image segment (204) of the at least one image over which a blend object (402) is to be superimposed; and
- selectively perform a sequence of image signal processes on a given image signal and control a plurality of parameters employed for performing the sequence of image signal processes, based on whether a given pixel that is employed to capture the given image signal lies in the at least one region or a remaining region within the photo-sensitive surface.

2. The system (100) of claim 1, wherein the image signal processor (104) is configured to provide separate processing pipeline paths with different sequences of image signal processes for image signals captured by pixels of the at least one region (208) and image signals captured by pixels of the remaining region.

3. The system (100) of claim 1 or 2, wherein the image signal processor (104) is configured to selectively perform the sequence of image signal processes and control the plurality of parameters employed therefor, further based on whether or not the given image signal represents a part of a salient feature in the at least one image (200, 404).

4. The system (100) of any of the preceding claims, wherein the image signal processor (104) is configured to:
- identify a gaze position on the photo-sensitive surface (206), based on a gaze direction of a user; and
- selectively perform the sequence of image signal processes on the given image signal and control the plurality of parameters employed therefor, further based on whether or not the given pixel lies within a predefined distance from the gaze position.

5. The system (100) of claim 4, wherein the image signal processor (104) is configured to predict the gaze direction of the user, based on a position of the image segment (204) in the at least one image (200, 404) over which the blend object (402) is to be superimposed.

6. The system (100) of any of claims 4-5, wherein, when selectively performing the sequence of image signal processes, the image signal processor (104) is configured to:
- perform local contrast enhancement on the given image signal when the given pixel lies in the remaining region, but within the predefined distance from the gaze position; and
- perform global contrast enhancement on the given image signal when the given pixel lies in the remaining region, but does not lie within the predefined distance from the gaze position.

7. The system (100) of any of claims 4-6, wherein, when selectively performing the sequence of image signal processes, the image signal processor (104) is configured to perform sharpening and edge enhancement on the given image signal when the given pixel lies in the remaining region, but within the predefined distance from the gaze position.

8. The system (100) of any of the preceding claims, wherein the plurality of parameters comprise a given colour conversion matrix that is to be employed for processing the given image signal, wherein, when controlling the plurality of parameters, the image signal processor (104) is configured to employ a first colour conversion matrix and a second colour conversion matrix for processing image signals captured by pixels of the at least one region (208) and image signals captured by pixels of the remaining region, respectively, wherein coefficients in the second colour conversion matrix are higher than coefficients in the first colour conversion matrix.

9. A method for selective image signal processing, via a system (100) comprising an image sensor (102, 202), wherein the image sensor comprises a plurality of pixels arranged on a photo-sensitive surface (206) thereof, the method comprising:
- receiving, from the image sensor, a plurality of image signals captured by corresponding pixels of the image sensor; and
- processing the plurality of image signals to generate at least one image (200, 404) by:
- determining at least one region (208) within the photo-sensitive surface that corresponds to an image segment (204) of the at least one image over which a blend object (402) is to be superimposed; and
- selectively performing a sequence of image signal processes on a given image signal and controlling a plurality of parameters employed for performing the sequence of image signal processes, based on whether a given pixel that is employed to capture the given image signal lies in the at least one region or a remaining region within the photo-sensitive surface.

10. The method of claim 9, further comprising providing separate processing pipeline paths with different sequences of image signal processes for image signals captured by pixels of the at least one region (208) and image signals captured by pixels of the remaining region.

11. The method of claim 9 or 10, wherein the step of selectively performing the sequence of image signal processes and controlling the plurality of parameters employed therefor, is further based on whether or not the given image signal represents a part of a salient feature in the at least one image (200, 404).

12. The method of any of claims 9-11, further comprising:
- identifying a gaze position on the photo-sensitive surface (206), based on a gaze direction of a user; and
- selectively performing the sequence of image signal processes on the given image signal and controlling the plurality of parameters employed therefor, further based on whether or not the given pixel lies within a predefined distance from the gaze position.

13. The method of claim 12, wherein, the step of selectively performing the sequence of image signal processes comprises:
- performing local contrast enhancement on the given image signal when the given pixel lies in the remaining region, but within the predefined distance from the gaze position; and
- performing global contrast enhancement on the given image signal when the given pixel lies in the remaining region, but does not lie within the predefined distance from the gaze position.

14. The method of any of claims 12-13, wherein the step of selectively performing the sequence of image signal processes comprises performing sharpening and edge enhancement on the given image signal when the given pixel lies in the remaining region, but within the predefined distance from the gaze position.

15. The method of any of claims 9-14, wherein the plurality of parameters comprise a given colour conversion matrix that is to be employed for processing the given image signal, wherein the step of controlling the plurality of parameters comprises employing a first colour conversion matrix and a second colour conversion matrix for processing image signals captured by pixels of the at least one region and image signals captured by pixels of the remaining region, respectively, wherein coefficients in the second colour conversion matrix are higher than coefficients in the first colour conversion matrix.
